# EUROPÄISCHE PATENTANMELDUNG

(11) **EP 3 045 678 A1**
(43) Veröffentlichungstag der Anmeldung: **20.07.2016**
(21) Anmeldenummer: 15151066.6
(22) Anmeldetag: 14.01.2015
(51) Int. Cl.: F01D 17/14, F16K 47/08

(54) **Regelventil und Turbine**

(71) Anmelder: Siemens Aktiengesellschaft, 80333 München (DE)
(72) Erfinder: Domnick, Bernhard Clemens, 46569 Hünxe (DE); Benra, Friedrich-Karl, 47057 Duisburg (DE); Musch, Christian, 45259 Essen (DE)

(57) **Zusammenfassung**

Die Erfindung betrifft ein Regelventil (1) zum Regeln eines gasförmigen Volumenstroms, insbesondere eines Dampfvolumenstroms (2), mit einem Ventilgehäuse (3), mit einem Ventilsitz (5) und mit einem relativ zu dem Ventilsitz (5) entlang einer Verlagerungsachse (7) verlagerbaren Ventildrosselelement (6; 106; 206), bei welchem das Ventilgehäuse (3) den Ventilsitz (5) ausgestaltet und bei welchem das verlagerbare Ventildrosselelement (6; 106; 206) einen mit dem Ventilsitz (5) wechselwirkenden Drosselkantenbereich (10; 110; 210) aufweist, wobei das Regelventil (1) mehrere mit dem Drosselkantenbereich (10; 110; 210) wechselwirkende Volumenstromverwirbelungselemente (15; 115; 215) aufweist, welche Scherschichtinstabilitäten in einer Scherschicht zwischen einem Wandstrahlbereich des gasförmigen Volumenstroms und einem Kernströmungsbereich des gasförmigen Volumenstroms vermeiden oder zumindest verringern.

## Beschreibung

Die Erfindung betrifft ein Regelventil zum Regeln eines gasförmigen Volumenstroms, insbesondere eines Dampfvolumenstroms, mit einem Ventilgehäuse, mit einem Ventilsitz und mit einem relativ zu dem Ventilsitz entlang einer Verlagerungsachse verlagerbaren Ventildrosselelement, bei welchem das Ventilgehäuse den Ventilsitz ausgestaltet und bei welchem das verlagerbare Ventildrosselelement einen mit dem Ventilsitz wechselwirkenden Drosselkantenbereich aufweist.

Die Erfindung betrifft des Weiteren eine Turbine, insbesondere eine Dampfturbine, mit einer Vielzahl an Ventileinrichtungen.

Gattungsgemäße Regelventile sind insbesondere an Dampfturbinen bekannt. Werden derartige Regelventile beispielsweise in einem angedrosselten Betriebszustand, das heißt, in einem nicht gänzlich geöffneten oder geschlossenen Betriebszustand des Regelventils betrieben, bildet sich in einem Strömungsinnenraum des Regelventils nahezu immer ein charakteristisches Strömungsbild aus, welches im Wesentlichen durch die Ausbildung eines Wandstrahlbereichs mit Strömungsgeschwindigkeiten gekennzeichnet ist, welche erheblich höher sind als die Strömungsgeschwindigkeiten eines Kernströmungsbereichs eines Volumenstroms.

Insofern verursachen die unterschiedlichen Strömungsgeschwindigkeiten eine Scherschicht zwischen dem Wandstrahlbereich des das Regelventil durchströmenden Volumenstroms und dem Kernströmungsbereich dieses Volumenstroms mit oftmals nicht zu vernachlässigenden hohe Geschwindigkeitsgradienten.

Sowohl aus experimentellen als auch aus numerischen Untersuchungen des Strömungsverhaltens an solchen Regelventilen ist bekannt, dass es in der Scherschicht zu Strömungsinstabilitäten kommen kann, welche kritische Resonanzeffekte in dem Strömungsraum des Regelventils verursachen können. Hierdurch kann es im schlimmsten Fall zu einer derartig unerwünschten Anregung der Regelventilstruktur kommen, welche eine Schädigung dieser Regelventilstruktur verursachen kann.

Um diesen Resonanzeffekten entgegenzuwirken, ist es bekannt, im Bereich des Ventilsitzes an dem Ventilgehäuse Strömungsgleichrichter vorzusehen, welche zu einer positiven Beeinflussung der Scherschicht beitragen können. Allerdings führen diese Einbauten in Form von Strömungsgleichrichtern nahezu immer zu erheblichen Strömungsverlusten, wodurch die Gesamtleistung der Turbine bzw. Dampfturbine gesenkt wird.

Es ist Aufgabe der Erfindung, gattungsgemäße Regelventile weiterzuentwickeln.

Die Aufgabe wird von einem Regelventil zum Regeln eines gasförmigen Volumenstroms, insbesondere eines Dampfvolumenstroms, mit einem Ventilgehäuse, mit einem Ventilsitz und mit einem relativ zu dem Ventilsitz entlang einer Verlagerungsachse verlagerbaren Ventildrosselelement gelöst, bei welchem das Ventilgehäuse den Ventilsitz ausgestaltet und bei welchem das verlagerbare Ventildrosselelement einen mit dem Ventilsitz wechselwirkenden Drosselkantenbereich aufweist, wobei das Regelventil mehrere mit dem Drosselkantenbereich wechselwirkende Volumenstromverwirbelungselemente aufweist, welche Scherschichtinstabilitäten in einer Scherschicht zwischen einem Wandstrahlbereichs des gasförmigen Volumenstroms und einem Kernströmungsbereich des gasförmigen Volumenstroms vermeiden oder zumindest reduzieren.

Durch die mit dem Drosselkantenbereich wechselwirkenden Volumenstromverwirbelungselemente kann die Scherschicht zwischen einem Wandstrahlbereichs des gasförmigen Volumenstroms und einem Kernströmungsbereich des gasförmigen Volumenstroms dahingehend manipuliert bzw. positiv beeinflusst werden, dass kritische Instabilitäten im Bereich der Scherschicht des gasförmigen Volumenstrom reduziert oder vermieden werden.

Insbesondere wird die Scherschicht hierbei signifikant besser durchmischt.

Hierdurch können konstruktiv sehr einfach unerwünschte Resonanzeffekte am Regelventil vermieden oder zumindest derart gedämpft werden, dass insbesondere eine Beeinträchtigung der Regelventilstruktur verhindert werden kann.

Eine Durchmischung der Scherschicht kann nochmals verbessert werden, wenn die Volumenstromverwirbelungselemente in Umfangsrichtung zumindest teilweise unterschiedlich lang ausgebildet sind.

Das vorliegende Regelventil kann baulich unterschiedlichst ausgestaltet sein, sofern es dem Absperren oder zumindest dem Drosseln eines gasförmigen Volumenstroms dienen kann.

Hinsichtlich eines bevorzugten Einsatzgebietes an einer Dampfturbine ist vorgesehen, dass der gasförmige Volumenstrom ein Dampfvolumenstrom ist.

Somit wird die Aufgabe der Erfindung auch von einer Turbine, insbesondere von einer Dampfturbine, mit einer Vielzahl an Ventileinrichtungen gelöst, wobei zumindest eine der Ventileinrichtungen ein Regelventil nach einem der hier beschriebenen Merkmale umfasst.

Vorteilhafterweise wird der Wirkungsgrad der Turbine, insbesondere der Dampfturbine, signifikant erhöht, wenn zumindest die relevanten Ventileinrichtungen der Turbine bzw. der Dampfturbine ein im Sinne der Erfindung ausgestaltetes Regelventil aufweisen.

Die im gasförmigen Volumenstrom als Störkörper wirkende Volumenstromverwirbelungselemente können hierbei beispielsweise kurz vor - in Strömungsrichtung gesehen - dem Drosselkantenbereich an dem Ventilgehäuse angeordnet sein.

Um Strömungsverluste im Regelventil möglichst klein zu halten, sollte die über die Ventilgehäuseinnenseite überstehende Höhe dieser Volumenstromverwirbelungselemente so gering wie möglich ausgestaltet sein.

Da sich eine kritische Scherschicht im Wesentlichen lediglich in einem angedrosselten Betriebszustand des Regelventils ausprägt, hat eine Höhenbegrenzung der Volumenstromverwirbelungselemente keinen oder nur einen zu vernachlässigenden Einfluss auf deren Wirksamkeit.

Darüber können die Druckverluste an dem Regelventil in einem erträglichen bzw. in einem zu vernachlässigenden Rahmen gehalten werden.

Sind die Volumenstromverwirbelungselemente konzentrisch um die Verlagerungsachse herum gegenüber dem Drosselkantenbereich an dem Ventilgehäuse angeordnet, kann die Scherschicht umfänglich besonders effektiv manipuliert werden. Verwirbelungselemente können auch unsymmetrisch in Umfangsrichtung angeordnet sein.

Kumulativ oder alternativ ist es vorteilhaft, wenn die Volumenstromverwirbelungselemente konzentrisch um die Verlagerungsachse herum an dem Drosselkantenbereich des verlagerbaren Ventildrosselelements angeordnet sind. Auch mit unmittelbar in dem Drosselkantenbereich integrierten Volumenstromverwirbelungselementen können die vorteilhaften Effekte der Erfindung erzielt werden.

Es versteht sich, dass die Volumenstromverwirbelungselemente nahezu beliebig konzentrisch um die Verlagerungsachse herum angeordnet sein können, insbesondere gleichmäßig verteilt. Hierbei spielt es keine Rolle, ob die Volumenstromverwirbelungselemente an dem Ventilsitz oder an dem Drosselkantenbereich angeordnet sind.

Die Effekte hinsichtlich der Scherschicht, insbesondere die Durchmischung der Scherschicht, können besonders gut ausgeprägt sein, wenn der Drosselkantenbereich des verlagerbaren Ventildrosselelements an einer dem Ventilsitz zugewandten Seite unsymmetrisch ausgestaltet ist.

Insofern ist es vorteilhaft, wenn der Drosselkantenbereich des verlagerbaren Ventildrosselelements in seiner Umfangsrichtung unsymmetrisch ausgestaltet ist. Auch hierdurch lässt sich die Durchmischung der Scherschicht sehr gut beeinflussen.

Durch eine Änderung der Geometrie des Drosselkantenbereichs kann eine positive Beeinflussung, insbesondere eine verbesserte Durchmischung, der Scherschicht erzielt werden.

Es versteht sich, dass die Volumenstromverwirbelungselemente unterschiedlichst realisiert sein können.

Konstruktiv sehr einfach können sie verwirklicht sein, wenn der Drosselkantenbereich des verlagerbaren Ventildrosselelements Materialausnehmungen und/oder Materialstege aufweist.

Diese Materialausnehmungen und/oder die Materialanhäufungen können besonders gut speziell im angedrosselten Zustand des Regelventils wirken, wenn die Materialausnehmungen und/oder die Materialstege dem Ventilsitz zugewandt sind.

Es können die Effekte hinsichtlich der Scherschicht besonders gut ausgeprägt sein, wenn die Materialausnehmungen und/oder die Materialstege in Umfangsrichtung des Drosselkantenbereichs ungleichmäßig verteilt an dem Ventildrosselelement angeordnet sind.

Eine Durchmischung der Scherschicht kann nochmals verbessert werden, wenn die Materialausnehmungen und/oder die Materialstege in Umfangsrichtung zumindest teilweise unterschiedlich lang ausgebildet sind.

Hinsichtlich einer besonders vorteilhaften Ausgestaltung der Erfindung kann der Drosselkantenbereich des verlagerbaren Ventildrosselelements an einer der dem Ventilsitz zugewandten Seite eine gezackte Kronenform aufweisen.

Die Zacken der Kronenform können durch ein Wechselspiel zwischen den in Umfangsrichtung verlaufenden Materialausnehmungen und Materialstegen konstruktiv einfach verwirklicht sein.

Insofern kann die Kronenform unsymmetrisch oder symmetrisch ausgestaltet sein, so dass eine gleichmäßig oder ungleichmäßig ausgebildete Kronenform vorliegen kann.

Weitere Merkmale, Effekte und Vorteile vorliegender Erfindung werden anhand anliegender Zeichnung und nachfolgender Beschreibung erläutert, in welchen beispielhaft ein Regelventil und unterschiedlich ausgebildete Drosselkantenbereiche von noch beispielhaft gezeigten Ventildrosselelementen dargestellt und beschrieben sind.

In der Zeichnung zeigen:
- Figur 1: schematisch eine Modellansicht eines Regelventils zum Regeln eines Dampfvolumenstroms mit einer Vielzahl an mit dem Drosselkantenbereich wechselwirkenden Volumenstromverwirbelungselementen, welche Scherschichtinstabilitäten in einer Scherschicht zwischen einem Wandstrahlbereichs des gasförmigen Volumenstroms und einem Kernströmungsbereich des gasförmigen Volumenstroms vermeiden;
- Figur 2: schematisch eine perspektivische Ansicht eines anderen Ventildrosselelements mit mehreren in Umfangsrichtung symmetrisch an einem Drosselkantenbereich angeordneten Volumenstromverwirbelungselementen; und
- Figur 3: schematisch eine perspektivische Ansicht eines weiteren Ventildrosselelements mit mehreren in Umfangsrichtung unsymmetrisch an einem Drosselkantenbereich angeordneten Volumenstromverwirbelungselementen.

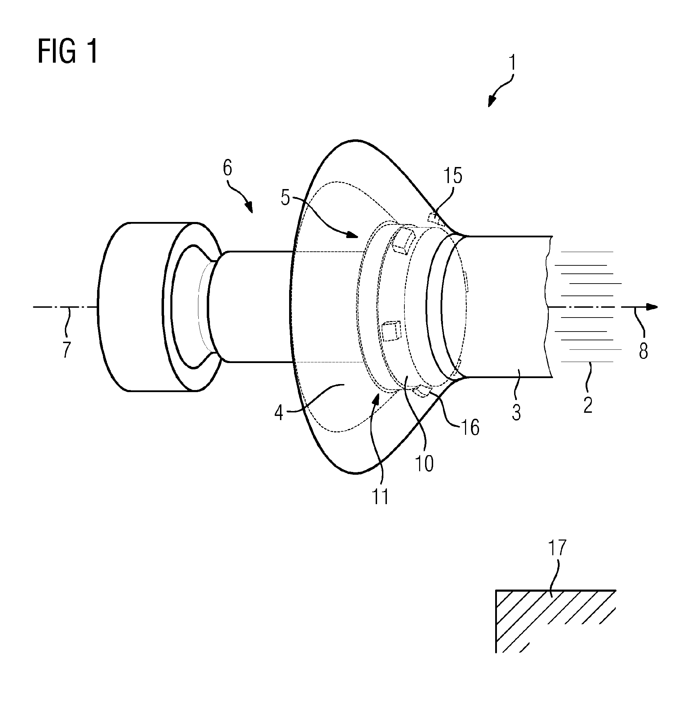

Das in der Figur 1 gezeigte Regelventil 1 zum Regeln bzw. zumindest zum Androsseln speziell eines Dampfvolumenstroms 2 weist ein Ventilgehäuse 3 mit einem Strömungsinnenraum 4 auf, an dessen Innenseite (nicht gesondert beziffert) ein kegelförmiger Ventilsitz 5 ausgebildet ist.

In dem Ventilgehäuse 3 ist ein gegenüber dem Ventilsitz 5 verlagerbares Ventildrosselelement 6 angeordnet, wobei dieses Ventildrosselelement 6 entlang einer Verlagerungsachse 7 verschieblich ist.

Der Dampfvolumenstrom 2 durchströmt das Regelventil 1 hierbei in Durchströmungsrichtung 8.

Das Ventildrosselelement 6 besitzt einen Drosselkantenbereich 10, welcher mit dem in dem Ventilgehäuse 3 eingelassenen Ventilsitz 5 umso stärker wechselwirken kann, je näher das Ventildrosselelement 6 an den Ventilsitz 5 heran bewegt wird. Dies trifft insbesondere dann zu, wenn das Regelventil 1 in einem angedrosselten Betriebszustand gefahren wird, bei welchem das Ventildrosselelement 6 nur mit einem geringeren Spalt von dem Ventilsitz 5 beabstandet angeordnet ist als in einem geöffneten Betriebszustand des Regelventils 1.

Der Drosselkantenbereich 10 ist zumindest teilweise kegel- oder torusförmig ausgestaltet, so dass er kompatibel zu dem kegelförmigen Ventilsitz 5 ist.

Der Drosselkantenbereich 10 erstreckt sich hierbei ringförmig um die Verlagerungsachse 7 herum.

Ferner ist der Drosselkantenbereich 10 an einem Ende 11 des Ventildrosselelements 6 ausgeprägt, welches dem Ventilsitz 5 zugewandt ist.

Um Scherschichtinstabilitäten zu vermeiden oder zumindest zu reduzieren, weist das Regelventil 1 eine Vielzahl an mit dem Drosselkantenbereich 10 wechselwirkenden Volumenstromverwirbelungselementen 15 (nur exemplarisch beziffert) auf, mittels welchen eine signifikant verbesserte Durchmischung der Scherschicht (nicht gezeigt) erzielt wird, so dass Geschwindigkeitsgradienten zwischen einem Wandstrahlbereich (nicht gezeigt) des Dampfvolumenstroms 2 und einem Kernströmungsbereich (nicht gezeigt) des Dampfvolumenstroms 2 vermeiden oder zumindest abgemildert werden können.

Bei dem in der Figur 1 gezeigten Ausführungsbeispiel sind die Volumenstromverwirbelungselemente 15 konzentrisch um die Verlagerungsachse 7 herum an dem Ventilgehäuse 3 und gegenüber dem Drosselkantenbereich 10 angeordnet.

Die Volumenstromverwirbelungselemente 15 sind hierbei als Materialanhäufungen 16 an dem Ventilgehäuse 3 ausgestaltet, welche an dem Ventilsitz 5 ausgeprägt sind.

Das in der Figur 1 gezeigte Regelventil 1 wird als Drosselventil in einer Ventileinrichtung einer hier nicht weiter gezeigten Dampfturbine 17 eingesetzt.

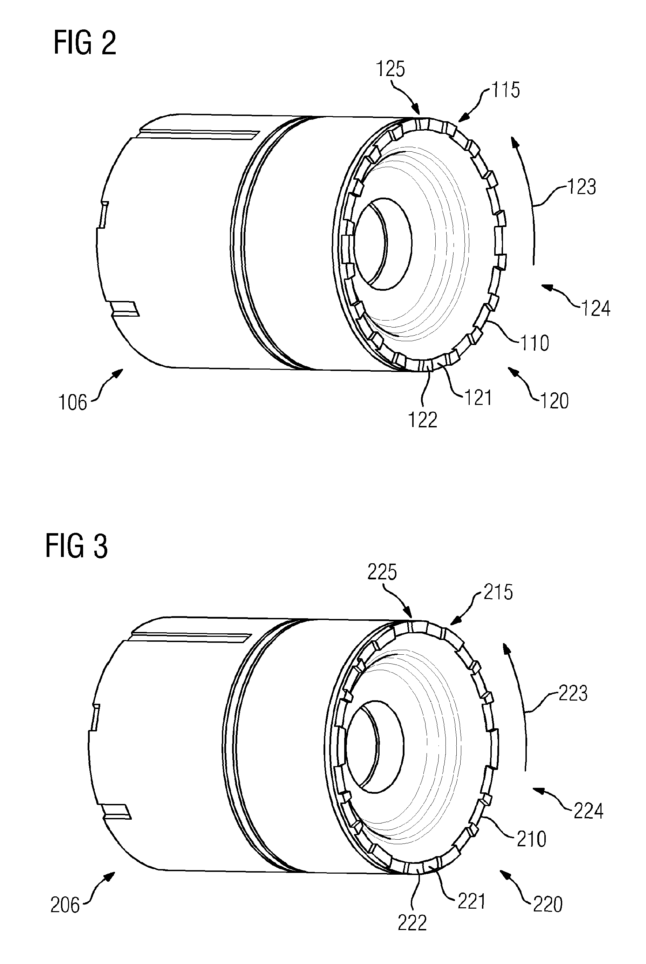

Bei dem in der Figur 2 gezeigten anderen Ventildrosselelement 106, welches ein Bestandteil eines ähnlichen wie in der Figur 1 gezeigten Regelventils 1 sein kann, wobei das dem anderen Ventildrosselelement 106 zugehörige Regelventil nicht gezeigt ist.

Das Ventildrosselelement 106 weist einen zumindest teilweise kegelförmig ausgebildeten Drosselkantenbereich 110 auf, welcher an einer dem Ventilsitz 5 (siehe beispielhaft Figur 1) zugewandten Seite 120 symmetrisch ausgestaltet ist.

An dem Drosselkantenbereich 110 des Ventildrosselelements 106 sind eine Vielzahl an Volumenstromverwirbelungselemente 115 angeordnet, welche in diesem Ausführungsbeispiel als Materialausnehmungen 121 an dem Drosselkantenbereich 110 ausgeprägt sind.

Die Materialausnehmungen 121 bedingen auch Materialstege 122 an dem Drosselkantenbereich 110, wobei jeweils zwei Materialstege 122 eine Materialausnehmung 121 seitlich in Umfangsrichtung 123 des Drosselkantenbereichs 110 begrenzen und vice versa.

Diese Materialausnehmungen 121 sind als Taschenbereiche in den Drosselkantenbereich 110 eingelassen und sie vermeiden Scherschichtinstabilitäten in einer Scherschicht zwischen einem Wandstrahlbereichs des Dampfvolumenstroms und einem Kernströmungsbereich des Dampfvolumenstroms.

Die Materialausnehmungen 121 bzw. die Materialstege 122 sind in Umfangsrichtung 123 des Drosselkantenbereichs 110 gleichmäßig verteilt an dem Ventildrosselelement 106 angeordnet.

Jedenfalls ist der Drosselkantenbereich 110 des verlagerbaren Ventildrosselelements 106 an seiner der dem Ventilsitz 5 zugewandten Seite 124 in Gestalt einer gezackten Kronenform 125 realisiert, wobei die Zacken durch die Materialstege 122 ausgeformt sind.

Mittels des derart ausgestalteten Ventildrosselelements 106 können die Scherschichtinstabilitäten in einer Scherschicht zwischen einem Wandstrahlbereichs des Dampfvolumenstroms 2 (siehe beispielhaft Figur 1) und einem Kernströmungsbereich des Dampfvolumenstroms 2 kumulativ oder alternativ vermeiden werden.

Bei dem in der Figur 3 gezeigten weiteren Ventildrosselelement 206, welches in etwa baugleich mit dem in der Figur 2 gezeigten anderen Ventildrosselelement 106 ist, sind die an dem Drosselkantenbereich 210 vorgesehenen Materialausnehmungen 221 bzw. Materialstegen 222 in Umfangsrichtung 223 des Drosselkantenbereichs 210 ungleichmäßig verteilt an dem Ventildrosselelement 206 angeordnet, wodurch die Effekte hinsichtlich der Vermeidung von Scherschichtinstabilitäten in einer Scherschicht zwischen einem Wandstrahlbereichs des Dampfvolumenstroms 2 (siehe beispielhaft Figur 1) und einem Kernströmungsbereich des Dampfvolumenstroms 2 nochmals verstärkt werden können.

Die an dem Drosselkantenbereich 210 eingearbeiteten Materialausnehmungen 221 und insofern auch die mit diesen korrespondierenden Materialstege 222 sind in Umfangsrichtung 223 des Drosselkantenbereichs 210 unterschiedlich lang ausgebildet.

Auch dieses weitere Ventildrosselelement 206 kann ein Bestandteil eines ähnlichen wie in der Figur 1 gezeigten Regelventils 1 sein, wobei auch das dem anderen Ventildrosselelement 206 zugehörige Regelventil nicht gezeigt ist.

Das Ventildrosselelement 206 weist somit einen zumindest teilweise kegelförmig ausgebildeten Drosselkantenbereich 210 auf, welcher an einer dem Ventilsitz 5 (siehe beispielhaft Figur 1) zugewandten Seite 224 jedoch unsymmetrisch ausgestaltet ist.

Insofern sind an dem Drosselkantenbereich 210 des Ventildrosselelements 206 ebenfalls eine Vielzahl an Volumenstromverwirbelungselemente 215 vorhanden, welche in dem in der Figur 3 gezeigten Ausführungsbeispiel als Materialausnehmungen 221 in Gestalt von Taschenbereichen an dem Drosselkantenbereich 210 ausgeprägt sind.

Die Materialausnehmungen 221 bzw. die Materialstege 222 sind in Umfangsrichtung 223 des Drosselkantenbereichs 210 ungleichmäßig verteilt an dem Ventildrosselelement 206 angeordnet.

Auch der Drosselkantenbereich 210 des verlagerbaren Ventildrosselelements 206 ist an seiner der dem Ventilsitz 5 zugewandten Seite 224 in Gestalt einer gezackten Kronenform 225 realisiert.

Obwohl die Erfindung im Detail durch das bevorzugte Ausführungsbeispiel näher illustriert und beschrieben wurde, so ist die Erfindung nicht durch dieses offenbarte Ausführungsbeispiel eingeschränkt, und andere Variationen können vom Fachmann hieraus abgeleitet werden, ohne den Schutzumfang der Erfindung zu verlassen.

## Patentansprüche

1. Regelventil (1) zum Regeln eines gasförmigen Volumenstroms, insbesondere eines Dampfvolumenstroms (2), mit einem Ventilgehäuse (3), mit einem Ventilsitz (5) und mit einem relativ zu dem Ventilsitz (5) entlang einer Verlagerungsachse (7) verlagerbaren Ventildrosselelement (6; 106; 206), bei welchem das Ventilgehäuse (3) den Ventilsitz (5) ausgestaltet und bei welchem das verlagerbare Ventildrosselelement (6; 106; 206) einen mit dem Ventilsitz (5) wechselwirkenden Drosselkantenbereich (10; 110; 210) aufweist, wobei das Regelventil (1) mehrere mit dem Drosselkantenbereich (10; 110; 210) wechselwirkende Volumenstromverwirbelungselemente (15; 115; 215) aufweist, welche Scherschichtinstabilitäten in einer Scherschicht zwischen einem Wandstrahlbereich des gasförmigen Volumenstroms und einem Kernströmungsbereich des gasförmigen Volumenstroms vermeiden oder zumindest verringern.

2. Regelventil (1) nach Anspruch 1,
wobei die Volumenstromverwirbelungselemente (15) konzentrisch um die Verlagerungsachse (7) herum gegenüber dem Drosselkantenbereich (10) an dem Ventilgehäuse (3) angeordnet sind.

3. Regelventil (1) nach Anspruch 1 oder 2,
wobei die Volumenstromverwirbelungselemente (15) konzentrisch um die Verlagerungsachse (7) herum an dem Drosselkantenbereich (110; 210) des verlagerbaren Ventildrosselelements (106; 206) angeordnet sind.

4. Regelventil (1) nach einem der Ansprüche 1 bis 3,
wobei der Drosselkantenbereich (210) des verlagerbaren Ventildrosselelements (206) an einer dem Ventilsitz (5) zugewandten Seite (224) unsymmetrisch ausgestaltet ist.

5. Regelventil (1) nach einem der Ansprüche 1 bis 4,
wobei der Drosselkantenbereich (210) des verlagerbaren Ventildrosselelements (206) in seiner Umfangsrichtung (223) unsymmetrisch ausgestaltet ist.

6. Regelventil (1) nach einem der Ansprüche 1 bis 5,
wobei der Drosselkantenbereich (110; 210) des verlagerbaren Ventildrosselelements (106; 206) Materialausnehmungen (121; 221) und/oder Materialstege (122; 222) aufweist.

7. Regelventil (1) nach Anspruch 6,
wobei die Materialausnehmungen (121; 221) und/oder die Materialstege (122; 222) dem Ventilsitz (5) zugewandt sind.

8. Regelventil (1) nach Anspruch 6 oder 7,
wobei die Materialausnehmungen (221) und/oder die Materialstege (222) in Umfangsrichtung (223) des Drosselkantenbereichs (210) ungleichmäßig verteilt an dem Ventildrosselelement (206) angeordnet sind.

9. Regelventil (1) nach einem der Ansprüche 6 bis 8,
wobei die Materialausnehmungen (221) und/oder die Materialstege (222) in Umfangsrichtung (223) zumindest teilweise unterschiedlich lang ausgebildet sind.

10. Regelventil (1) nach einem der Ansprüche 1 bis 9,
wobei der Drosselkantenbereich (110; 210) des verlagerbaren Ventildrosselelements (106; 206) an einer der dem Ventilsitz (5) zugewandten Seite (123; 223) eine gezackte Kronenform (125; 225) aufweist.

11. Turbine, insbesondere Dampfturbine (17), mit einer Vielzahl an Ventileinrichtungen,
wobei zumindest eine der Ventileinrichtungen ein Regelventil (1) nach einem der vorstehenden Ansprüche umfasst.
